# EUROPEAN PATENT APPLICATION

(11) **EP 2 544 506 A1**
(43) Date of publication of application: **09.01.2013**
(21) Application number: 11750171.8
(22) Date of filing: 01.03.2011
(51) Int. Cl.: H04W 88/18

(54) **METHOD, DEVICE AND SYSTEM FOR VOICE COMMUNICATION**

(30) Priority: 01.03.2010 CN 201010118867
(71) Applicant: Huawei Technologies Co., Ltd., Shenzhen, Guangdong 518129 (CN)
(72) Inventor: QIAN, Jia, Guangdong 518129 (CN)
(74) Representative: Epping - Hermann - Fischer
(86) International application number: PCT/CN2011/071422
(87) International publication number: WO 2011/107018

(57) **Abstract**

Embodiments of the present invention disclose a voice communication method, device and system. The communication method includes the following steps: a radio resource management RRM unit of a base station controller BSC receives a conversation request initiated by a user equipment UE; the RRM unit obtains conversation configuration information according to the conversation request; the RRM unit sends a first message to a transcoder TC of the BSC, where the first message includes the conversation configuration information; the TC judges whether conversation configuration of both ends of a conversation matches; and the TC starts tandem free operation TFO communication if a judging result is that the conversation configuration of both the ends of the conversation matches. Adopting the embodiments of the present invention, the configuration information does not transmit in a form of stealing a voice frame. Therefore, transmission quality of voice information is ensured, transmission time of the configuration information is decreased, a conversation delay is reduced, and conversation timeliness is enhanced.

## Description

This application claims priority to Chinese Patent Application No. 201010118867.9, filed on March 01, 2010 and entitled "VOICE COMMUNICATION METHOD, DEVICE AND SYSTEM", which is incorporated herein by reference in its entirety.

### FIELD OF THE INVENTION

The present invention relates to the communication field, and in particular, to a voice communication method, device and system.

### BACKGROUND OF THE INVENTION

In a normal user equipment (User Equipment, referred to as UE)-user equipment conversation mode, a voice signal first undergoes source compression encoding and channel encoding on a local UE side, and is then transmitted through an air interface; a base transceiver station (Base station transceiver, referred to as BTS) receives the voice signal and performs channel decoding, and transmits the signal to a transcoder (Trans Coder, referred to as TC); the TC decodes the signal into a pulse code modulation (Pulse Code Modulation, referred to as PCM) A-law/µ-law bit stream, and transmits the stream in a core network. A peer TC performs a reverse coding operation until a peer UE recovers original voice through source decoding. Here the UE and the TC need to perform duplicate tandem operations of voice encoding and decoding, which impairs the voice signal.

To reduce impairment to the voice signal, a tandem free operation (Tandem Free Operation, referred to as TFO) technology under an adaptive multi-rate (Adaptive Multi-Rate, referred to as AMR) voice encoding technology transmits compressed voice on an A interface directly on a precondition that both parties in a UE-UE conversation uses a same voice encoding mode, and reduces an encoding/decoding operation at the TC, thereby improving the voice signal, decreasing transmission time, and reducing an end-to-end delay.

However, in the prior art, in a process of judging whether TFO communication can be started on both the parties of the conversation, configuration information needs to be transmitted in a form of stealing a voice frame, which affects transmission quality of voice information.

### SUMMARY OF THE INVENTION

A problem that needs to be solved by embodiments of the present invention is: to provide a voice communication method, device and system to ensure quality of voice communication in a process of starting TFO communication.

To solve the foregoing technical problem, an embodiment of the present invention provides a voice communication method, including: a radio resource management RRM unit of a base station controller BSC receives a conversation request initiated by a user equipment UE; the RRM unit obtains conversation configuration information according to the conversation request; the RRM unit sends a first message to a transcoder TC of the BSC, where the first message includes the conversation configuration information; the TC judges whether conversation configuration of both ends of a conversation matches; and the TC starts tandem free operation TFO communication if a judging result is that the conversation configuration of both the ends of the conversation matches.

An embodiment of the present invention provides a voice communication device, including: a radio resource management, RRM, unit, configured to receive a conversation request initiated by a user equipment, UE, and obtain configuration information of a conversation according to the conversation request, where the RRM unit is set in a base station controller, BSC, and the RRM unit is further configured to send a first message to a transcoder TC of the BSC, where the first message includes the conversation configuration information; and the TC, configured to judge whether configuration information of both ends of the conversation matches, and start tandem free operation, TFO, communication if a judging result is that the configuration information of both the ends of the conversation matches.

An embodiment of the present invention provides a voice communication system, including the foregoing described voice communication device.

Comparing the embodiments of the present invention with the prior art, a main difference and its effect lie in:
In the embodiments of the present invention, the conversation configuration information is sent from the RRM unit to the TC, and is not transmitted through a voice channel, which overcomes a problem of stealing a voice frame to transmit the configuration information and therefore affecting voice information transmission, and ensures the quality of the voice communication.

### BRIEF DESCRIPTION OF THE DRAWINGS

To illustrate the technical solutions in the embodiments of the present invention or in the prior art more clearly, accompanying drawings needed for description of the embodiments or the prior art are briefly introduced below.
FIG. 1 is a schematic flowchart of a voice communication method according to an embodiment of the present invention;
FIG. 2 is a schematic flowchart of a voice communication method according to another embodiment of the present invention;
FIG. 3 is a schematic flowchart of a voice communication method according to another embodiment of the present invention; and
FIG. 4 is a schematic structural diagram of a voice communication device according to an embodiment of the present invention.

### DETAILED DESCRIPTION OF THE EMBODIMENTS

The technical solutions in the embodiments of the present invention are hereinafter described clearly and completely with reference to the accompanying drawings. Obviously, the described embodiments are merely part of the embodiments of the present invention, rather than all of the embodiments of the present invention. Based on the embodiments of the present invention, all other embodiments obtained by persons of ordinary skill in the art without making creative efforts shall fall within the protection scope of the present invention.

In order to make the foregoing objectives, characteristics and advantages of embodiments of the present invention more obvious and comprehensible, the embodiments of the present invention are further illustrated in detail in the following with reference to the accompanying drawings and specific implementation manners.

In existing UE-UE communication based on TFO, a UE of a local end is in a peer-to-peer state with a UE of a peer end. For example, when the local end initiates a conversation request, a radio resource management (Radio Resource Management, referred to as RRM) unit in a base station controller (Base Station Controller, referred to as BSC) activates a traffic channel and a TC path of a BTS, which refers to that RRM units of the local end and the peer end each activate the traffic channel and the TC path of their corresponding BTS. After TFO communication is adopted, a cell handover may occur to a local UE or a peer UE, or a cell handover occurs to the local UE and the peer UE simultaneously. Because the local end and the peer end are in the peer-to-peer state in a conversation, operations to be performed on both ends are peer-to-peer. In the embodiments of the present invention, the local end is taken as an example. For example, after the RRM unit receives the conversation request sent by the UE to a base station, the RRM unit obtains conversation configuration information, that is, the local RRM unit and the peer RRM unit each obtain their corresponding conversation configuration information. For ease of illustration, in the description of the following embodiments, only that the local end is an object is taken for illustration.

In the prior art, after the RRM unit of the BSC receives the conversation request sent by the UE to the base station, the RRM obtains the conversation configuration information, and sends the conversation configuration information to the BTS, and then the BTS sends the conversation configuration information to a TC; the TC judges match of the configuration information of the local end and the peer end according to the received configuration information, so as to decide whether the TFO communication can be started. During transmission of the conversation configuration information, a manner of stealing a voice frame (in a process of transmitting the conversation configuration information, making use of the voice frame is referred to as "stealing a frame") is adopted.

In the prior art, in a process of judging whether the TFO communication can be started, configuration information that needs to be transmitted adopts the manner of stealing the voice frame, which affects transmission quality of voice information.

Aiming at the foregoing technical problems, the embodiments of the present invention provide corresponding technical solutions, which are described in detail below.

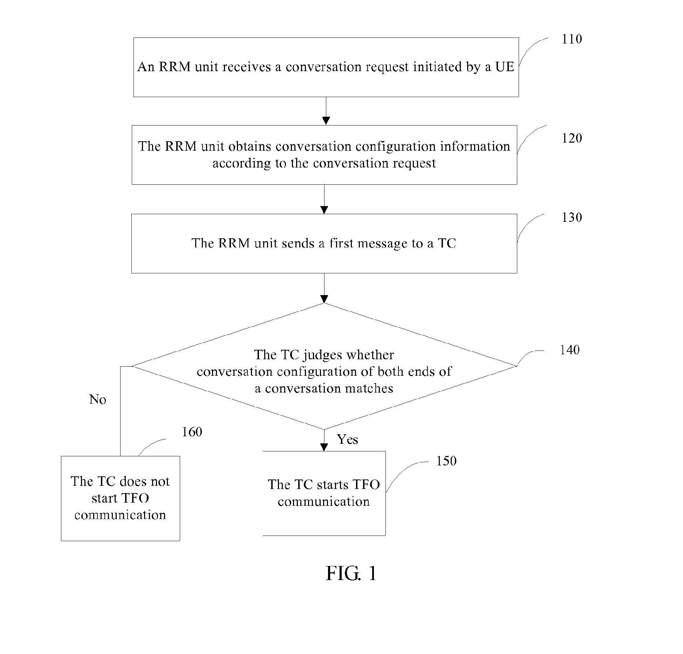

FIG. 1 is a schematic flowchart of a communication method according to an embodiment of the present invention. As shown in FIG. 1, the communication method in an embodiment of the present invention includes the following steps:
Step 110: A radio resource management, RRM, unit of a base station controller, BSC, receives a conversation request initiated by a user equipment, UE.

In this step, when the UE initiates the conversation request, the RRM unit of the BSC receives the conversation request initiated by the UE. The conversation request carries conversation configuration information, where the conversation configuration is related to configuration information of the BSC corresponding to a local end in this conversation and a support capability of the UE.
Step 120: The RRM unit obtains the conversation configuration information according to the conversation request.

The RRM unit obtains the conversation configuration information of the local end from the conversation request which is initiated by the UE and is received by the RRM itself, namely, the conversation configuration information corresponding to the UE in this conversation. It may be understood that, a peer RRM unit in the conversation also obtains its corresponding conversation configuration information, which is not repeatedly described hereinafter.
Step 130: The RRM unit sends a first message to a transcoder, TC, of the BSC.

The RRM unit sends the first message to the transcoder, TC, of a BSC, where the BSC corresponds to the RRM, and the first message includes the conversation configuration information of the local end. The conversation configuration information is needed for judging whether TFO can be started in subsequent steps, and includes configuration information needed for the judging, such as a voice encoding mode. When the voice encoding mode is AMR, an active code mode set (Active Code mode Set, referred to as ACS) is further included. In addition, the first message may include other information, such as a supported codec set (Supported Codec Set, referred to as SCS), a code mode indication (code mode indication, referred to as CMI), a code mode request (code mode request, referred to as CMR), air interface phase information, and so on.
Step 140: The TC judges whether conversation configuration of both ends of the conversation matches.

The TC judges whether the conversation configuration information of the local end and a peer end matches. The conversation configuration information of the local end is included in the first message sent by the RRM unit to the TC in step 130. Here matching of the conversation configuration of both the ends may refer to: Both the ends (the local end and the peer end) of the conversation use the same voice encoding mode, and the ACSs of both the ends of the conversation match when both the ends adopts the AMR voice encoding mode. It may be understood that, the matching of the conversation configuration is not limited to that the conversation configuration of both the ends are the same.

In this step, if a judging result is that the configuration information of both the ends of the conversation matches, execute step 150; if the judging result is that the configuration information of both the ends of the conversation does not match, execute step 160.
Step 150: If the judging result is that the configuration information of both the ends of the conversation matches, the TC starts tandem free operation, TFO, communication.

If the judging result in step 140 is that the conversation configuration of the local end and the peer end matches, the TC starts the TFO communication. After the TC starts the TFO communication, the TC does not perform an encoding/decoding operation on voice information, but directly transmits compressed voice information on an A interface.
Step 160: If the judging result in step 140 is that the conversation configuration of both the ends does not match, the TC does not start the TFO communication.

That is, if the judging result in step 140 is that the conversation configuration corresponding to the local end and the peer end does not match, the TC does not start the TFO communication, and the TC needs to perform the encoding/decoding operation on the voice information.

In this embodiment, the conversation configuration information is directly sent from the RRM unit to the TC (does not need to be sent from the RRM unit to the BTS), and there is no need to transmit the configuration information by stealing a voice frame, which avoids that the transmission quality of the voice information is affected by stealing the voice frame, decreases transmission time of the configuration information, reduces a conversation delay, and enhances conversation timeliness.

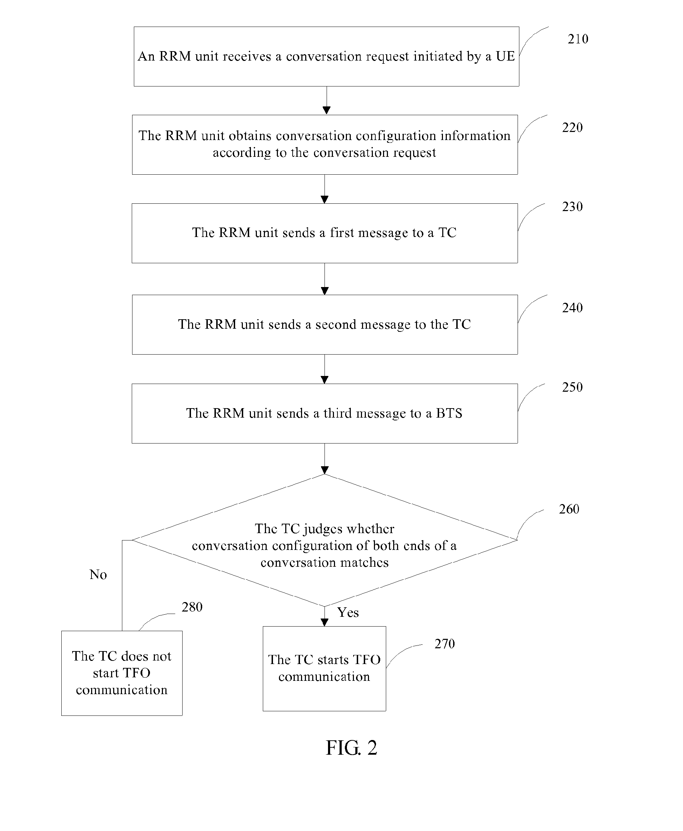

FIG. 2 is a schematic flowchart of a method according to another embodiment of the present invention. As shown in FIG. 2, the communication method in another embodiment of the present invention includes the following steps:
Step 210: A radio resource management, RRM, unit of a base station controller, BSC, receives a conversation request initiated by a user equipment, UE.

Reference may be made to step 110 for a receiving method.
Step 220: The RRM unit obtains conversation configuration information according to the conversation request.

Reference may be made to step 120 for an obtaining method.
Step 230: The RRM unit sends a first message to a transcoder, TC, of the BSC.

Reference may be made to step 130 for a sending method.
Step 240: The RRM unit sends a second message to the transcoder, TC.

The RRM unit sends the second message to the TC, where the second message may include TFO enabling information. It may be understood that, the TFO enabling information may play a role of turning on a TFO function switch.
Step 250: The RRM unit sends a third message to the BTS.

The RRM unit sends the third message to the BTS, where the third message includes information for activating a traffic channel of the BTS. It may be understood that, the traffic channel of the BTS refers to a path for transmitting voice information between the BTS and the UE.
Step 260: The TC judges whether conversation configuration of both ends matches.

Reference may be made to step 140 for a specific method. If a judging result is that the conversation configuration of both the ends matches, execute step 270; if the judging result is that the conversation configuration of both the ends does not match, execute step 280.
Step 270: If the judging result in step 260 is that the conversation configuration of both the ends matches, the TC starts tandem free operation, TFO, communication.

Reference may be made to step 150 for a communication method.
Step 280: If the judging result in step 260 is that the conversation configuration of both the ends does not match, the TC does not start the tandem free operation, TFO, communication.

Reference may be made to step 160 for a specific method.

In this embodiment, an execution order of step 230, step 240, and step 250 is not limited by sequence numbers, and the order may be swapped; or may be sent simultaneously, or contents to be sent in these steps may be included and sent in a same message.

In this embodiment, the message sent from the RRM unit to the TC may further include information for activating a TC path.

In this embodiment, the conversation configuration information and the TFO enabling information are directly transmitted from the RRM unit to the TC. In a transmission process, there is no need to steal a voice frame. Not only transmission quality of voice information is ensured, communication quality is improved, but transmission time of the configuration information is decreased (the configuration information includes but is not limited to the conversation configuration information and the TFO enabling information), a conversation delay is reduced, and conversation timeliness is enhanced as well.

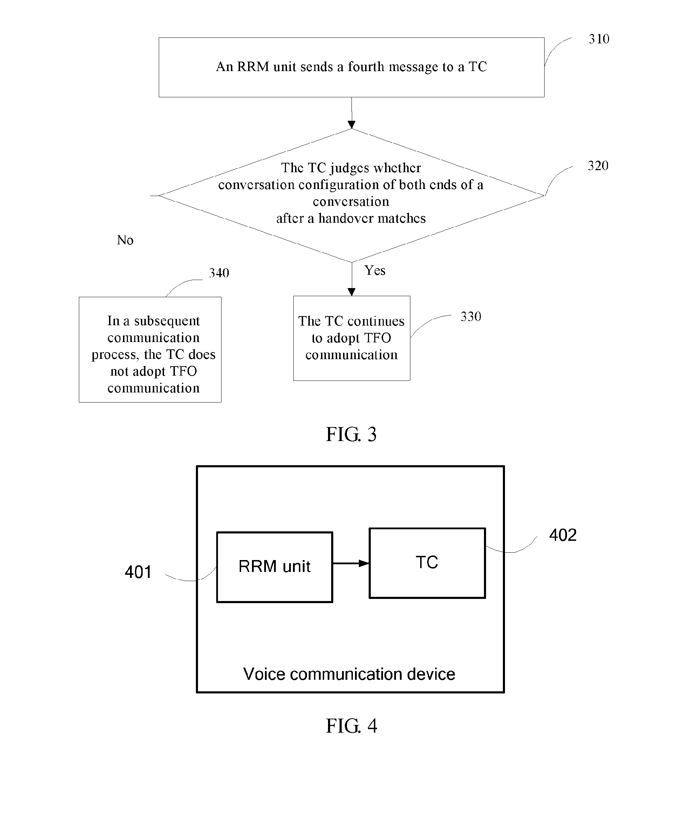

FIG. 3 is a schematic flowchart of a method according to another embodiment of the present invention. As shown in FIG. 3, the communication method in another embodiment of the present invention includes the following steps:
In this embodiment, after a process of starting TFO, and after communication is performed when a TC starts the TFO, a UE in a conversation needs a cell handover, and the TC needs to rejudge whether TFO communication can be continued to be adopted. It may be understood that, it may be a local UE that needs the cell handover, or it may be a peer UE that needs the cell handover, or the UEs on both ends of the conversation need the cell handover. No matter which situation it is, it is needed to re-obtain conversation configuration information of a local end and a peer end after the cell handover, and judge whether the conversation configuration of both the ends matches and then decide whether to continue to adopt the TFO communication. The methods of them are similar. For ease of illustration, in this embodiment, that the local UE needs the cell handover is taken as an example for illustration.

Because the process of starting the TFO communication is similar to that in the two foregoing embodiments, this embodiment only describes the steps after the TFO communication is started and the local UE needs the cell handover, including:
Step 310: An RRM unit sends a fourth message to a TC.

The RRM unit sends the fourth message to the TC, where the fourth message includes conversation configuration information corresponding to a target cell of handover. Reference may be made to step 130 for a specific sent content and method.
Step 320: The TC judges whether conversation configuration of both ends of a conversation after the handover matches.

In this step, there is a need to obtain the conversation configuration information after the handover as long as there is a UE that needs a cell handover on either of the two ends of the conversation. It may be understood that, conversation configuration after the handover is related to configuration information of a corresponding BSC after the cell handover and a support capability of the UE. After obtaining the conversation configuration information after the handover, the TC needs to perform judgment aiming at the conversation configuration of both the end after the handover.

If a judging result is that the conversation configuration of both the ends after the handover matches, execute step 330; if the judging result is that the conversation configuration of both the ends after the handover does not match, execute step 340.
Step 330: If the judging result is that the conversation configuration of both the ends after the handover matches, the TC continues to adopt TFO communication.

Reference may be made to step 150 for a specific communication method.
Step 340: If the judging result in step 320 is that the conversation configuration information of both the ends after the handover does not match, the TC does not adopts the TFO communication in the subsequent communication process, but needs to perform an encoding/decoding operation on voice.

In the several foregoing embodiments of the present invention, because the TC does not perform the encoding/decoding operation, the BTS needs to determine a local uplink encoding rate. The determining, by the BTS, the local uplink encoding rate may include: First, the BTS receives a downlink encoding rate request from the peer end; second, the BTS calculates a local encoding rate according to local air interface quality; finally, according to the local encoding rate and the downlink encoding rate request of the peer end, the BTS selects, from the two, a smaller value as the local uplink encoding rate.

In addition, in the several foregoing embodiments of the present invention, because after the TFO is started, a phase of a downlink Abis interface of the local BTS is determined by an air interface uplink of a peer mobile phone. (It may be understood that, the Abis interface is an interface between the BTS and its corresponding BSC, and an air interface is an interface between the BTS and the UE.) Because phase adjustment cannot be performed when the TC does not perform encoding/decoding, the BTS needs to be adaptive to the Abis interface phase as soon as the conversation is set up.

According to whether the current BTS buffers voice information, the BTS may make a judgment differently:
In a situation that the current BTS does not buffer the voice information, the BTS judges whether an Abis interface rate changes when the UE sends a rate change request CMR. If a judging result is that the Abis interface rate changes when the UE sends the CMR, the BTS buffers the voice information, and then codes a previous frame in the buffer each time subsequently. If the judging result is that the Abis interface rate does not change when the UE sends the CMR, the BTS does not buffer the voice information.

In a situation that the current BTS is buffering the voice information, the BTS judges whether the Abis interface rate changes when the BTS sends a CMI. If the judging result is that the Abis interface rate changes when the BTS sends the CMI, the BTS cancels buffering the voice information and discards a buffered frame, and then codes a currently received frame each time subsequently. If the judging result is that the Abis interface rate does not change when the BTS sends the CMI, the BTS does not cancel buffering the voice information (the BTS continues buffering the voice information).

In this embodiment, when any UE in the conversation needs the cell handover, in a process of judging whether to continue the TFO communication in the subsequent communication process, the configuration information is directly sent from the RRM unit to the TC, thereby ensuring transmission quality of the voice information.

In addition, the method of determining the local uplink encoding rate and the buffering method in this embodiment enable the conversation to go on smoothly in a process that the TC does not perform encoding/decoding.

FIG. 4 is a schematic structural diagram of a voice communication device according to an embodiment of the present invention. As shown in FIG. 4, the voice communication device provided in this embodiment of the present invention may include: a radio resource management, RRM, unit 401, and a transcoder, TC 402.

The RRM unit 401 is configured to receive a conversation request initiated by a user equipment, UE. It may be understood that, the RRM unit belongs to a corresponding base station controller, BSC.

When the UE initiates the conversation request, the RRM unit 401 receives the conversation request initiated by the UE. The conversation request includes conversation configuration information of a local end. It may be understood that, conversation configuration is related to a support capability of a local UE and configuration information of the BSC corresponding to the UE.

The RRM unit 401 is further configured to obtain the conversation configuration information according to the conversation request.

Because the conversation request includes the conversation configuration information, the RRM unit 401 obtains the conversation configuration information from the conversation request. Here, that a peer RRM unit obtains conversation configuration information of a peer end is also impliedly included.

The RRM unit 401 is further configured to send a first message to the transcoder, TC of the BSC, where the first message includes the conversation configuration information obtained by the RRM unit 401. The obtained conversation configuration information here is the configuration information subsequently needed by the transcoder 402 for judging whether TFO can be started, and includes configuration information needed for the transcoder 402 to perform judgment, such as a voice encoding mode. When the voice encoding mode is AMR, an ACS is further included. In addition, the first message may include other information, such as a supported codec set, a CMI, a CMR, air interface phase information, and so on.

The TC402 is configured to judge whether the conversation configuration of both ends of a conversation matches.

The TC 402 judges whether configuration information of the local end and the peer end matches. It may be understood that, TCs of the local end and the peer end each obtain the conversation configuration information and then perform information interaction, and judge whether the conversation configuration information of both the ends matches, where it may be: judging whether the two ends (the local end and the peer end) adopt the same voice encoding mode, and whether the ACSs of both the ends are equal when both the ends adopt the AMR voice encoding mode.

If a judging result is that the conversation configuration information of both the ends matches, the TC 402 starts both the ends of the conversation in communication by using TFO.

In this embodiment, the conversation configuration information is directly sent from the RRM unit 401 to the TC 402, and does not need to be forwarded by the BTS, and the configuration information also does not need to be transmitted by stealing a voice frame. Therefore, not only transmission time of the configuration information is decreased, but transmission quality of voice information is ensured, and communication quality is improved as well.

In another embodiment of the present invention, a voice communication device may include the following modules: an RRM unit and a TC. Reference may be made to the foregoing embodiment for a specific function.

The RRM unit in the device is further configured to send a second message to the TC, where the second message may include TFO enabling information. It may be understood that, the TFO enabling information may play a role of turning on a TFO function switch; and/or

The RRM unit is further configured to send a third message to a BTS, where the third message includes information for activating a traffic channel of the BTS. It may be understood that, the traffic channel of the BTS refers to a path for transmitting voice information between the BTS and a UE.

In this embodiment, after the TC starts TFO communication, if a communicating UE needs a cell handover in a communication process (the UE that needs the cell handover may be a local UE, and may also be a peer UE, or may be a local UE and a peer UE of both ends; corresponding to the method embodiments, in this application, only that the local UE needs the cell handover is taken as an example for illustration.), the RRM unit may further be configured to send a fourth message to the TC, where the fourth message includes conversation configuration information corresponding to a target cell of handover.

The TC is further configured to judge whether conversation configuration information of both the ends after the handover matches. It may be understood that, as long as there is a UE that needs the cell handover on either or the two ends of the conversation, the conversation configuration information corresponding to the end of the cell handover may change, and the TC needs to judge whether the conversation configuration information of both the ends after the handover changes, so as to decide whether to continue to adopt the TFO communication subsequently.

The TC is further configured to continue to adopt the TFO communication if a judging result of the TC is that the conversation configuration information of both the ends after the handover matches.

In this embodiment, the RRM unit is further configured to send, to the TC, a message that carries information for activating a TC path.

In this embodiment, the RRM unit sends the configuration information to the TC (the RRM unit directly sends the configuration information to the TC, but not to the BTS), and the TC judges whether the TFO communication can be continued to adopt after the UE undergoes the cell handover, therefore there is no need to steal a voice frame for transmitting the configuration information. The RRM unit sends the TFO enabling information to the TC without stealing the voice frame, thereby further ensuring a transmission rate of the voice information and improving communication quality.

An embodiment of the present invention relates to a communication system, including the foregoing described voice communication device.

A communication system provided in another embodiment of the present invention includes not only the foregoing described voice communication device, but also a base transceiver station BTS.

The BTS is configured to judge whether an Abis interface rate changes when a UE sends a rate change request CMR. The BTS is configured to buffer voice information according to a judgment result.

According to whether the current BTS buffers the voice information, the base transceiver station may make a judgment differently:
In a situation that the current BTS does not buffer the voice information:
   The base transceiver station judges whether the Abis interface rate changes when the UE sends the rate change request CMR.

If the base transceiver station judges that the Abis interface rate changes when the UE sends the CMR, the base transceiver station starts buffering the voice information, and codes a previous frame in the buffer each time subsequently.

If the base transceiver station judges that the Abis interface rate does not change when the UE sends the CMR, the base transceiver station does not buffer the voice information.

In a situation that the current BTS is buffering the voice information:
The base transceiver station judges whether the Abis interface rate changes when the BTS sends a CMI.

If judging that the Abis interface rate changes when the BTS sends the CMI, the base transceiver station cancels buffering, that is, the base transceiver station does not perform buffering.

If the base transceiver station judges that the Abis interface rate does not change when the BTS sends the CMI, the base transceiver station continues buffering.

In addition, the base transceiver station in this embodiment judges whether the BTS in a conversation needs to buffer the voice information. Therefore, the conversation can go on smoothly in a process that a TC in the communication system does not perform encoding/decoding, and conversation quality is improved.

The embodiments of the present invention are applicable to a global system for mobile communications (Global System For Mobile Communications, referred to as: GSM) system. In the embodiments of the present invention, the AMR encoding mode is mainly taken as an example for illustration, and the TFO communication may be adopted and applied in other encoding modes, where their methods are similar to that in the embodiments of the present invention.

Persons skilled in the art may clearly understand that, for convenience and briefness of description, reference may be made to the corresponding process in the foregoing method embodiments for a specific working process of the foregoing described system, device, module and unit, which are not repeatedly described here.

Through the description of the foregoing embodiments, persons skilled in the art may clearly understand that the present invention may be implemented in a manner of software plus a necessary universal hardware platform, and of course, may also in a manner of hardware, but the former is a better implementation manner in many situations. Based on such understanding, the nature of the technical solutions of the present invention or the part that makes contribution to the prior art may be embodied as a software product. The computer software product is stored in a storage medium, and includes several instructions that enable a computer device (which may be a personal computer, a server, or a network device and so on) to execute all or part of the steps of the methods in each embodiment of the present invention. The storage medium includes: various media that may store program codes, such as a USB flash disk, a removable hard disk, a read-only memory (ROM), a random access memory (RAM), a magnetic disk, or a compact disk, and so on.

In the several embodiments provided in this application, it should be understood that, the disclosed system, device and method may be implemented in other manners without exceeding the scope of this application. For example, the foregoing device embodiments are merely exemplary, and for example, the modules or division of the modules is merely division of logical functions, and there may be other dividing manners in practical implementation. For example, multiple modules or components may be combined or may be integrated into another system, or some characteristics may be ignored or not executed, where the modules described as separate components may be or may not be physically separated; and the components shown as modules may be or may not be physical modules, that is, may be located in one place, or distributed on multiple network modules. Part of or all of the modules may be selected, according to an actual need, to achieve the objectives of the solutions of the embodiments. Persons of ordinary skill in the art may understand and implement the embodiments without making creative efforts.

In addition, the schematic diagrams for describing the system, device, method and different embodiments may be combined or integrated with other systems, modules, technologies or methods without exceeding the scope of this application. For another point, the shown or discussed mutual coupling or direct coupling or communication connection may be indirect coupling or communication connection implemented via some interfaces, devices or modules, and may in electrical, mechanical, or other forms.

The foregoing descriptions are merely specific implementation manners of the present invention, but not intended to limit the protection scope of the present invention. Any variation or replacement that may be easily thought of by persons skilled in the art without departing from the technical scope disclosed in the present invention shall fall within the protection scope of the present invention. Therefore, the protection scope of the present invention is subject to the protection scope of the claims.

## Claims

1. A voice communication method, comprising the following steps:
Receiving, by a radio resource management, RRM unit of a base station controller, BSC, a conversation request initiated by a user equipment, UE;
Obtaining, by the RRM unit, conversation configuration information according to the conversation request;
Sending, by the RRM unit, a first message to a transcoder, TC, of the BSC, wherein the first message comprises the conversation configuration information;
Judging, by the TC, whether conversation configuration of both ends of a conversation matches; and
Starting, by the TC, tandem free operation, TFO, communication if a result of the judging is that the conversation configuration of both the ends of the conversation matches.

2. The method according to claim 1, further comprising:
Sending, by the RRM unit, a second message to the TC, wherein the second message comprises TFO enabling information; and
Sending, by the RRM unit, a third message to a base transceiver station BTS, wherein the third message comprises information for activating a traffic channel of the BTS.

3. The method according to claim 1 or claim 2, wherein in a communication process, when the UE needs a cell handover, the method further comprises:
Sending, by the RRM unit, a fourth message to the TC, wherein the fourth message comprises conversation configuration information corresponding to a target cell of handover;
Judging, by the TC, whether conversation configuration of both the ends of the conversation after the handover matches; and
Continuing, by the TC, to adopt TFO communication if a result of the judging is that the configuration information of both the ends of the conversation after the handover matches.

4. The method according to any one of claims 1 to 3, further comprising:
judging, by the BTS, whether an Abis interface rate changes when the UE sends a rate change request CMR; and
buffering, by the BTS, voice information if a result of the judging is that the Abis interface rate changes when the UE sends the CMR.

5. The method according to any one of claims 1 to 3, wherein the matching of the conversation configuration of both the ends of the conversation comprises:
voice encoding modes of both the ends of the conversation are adaptive multi-rate AMR encoding modes, and active code mode sets (ACS) of both the ends of the conversation match.

6. A voice communication device, comprising:
a radio resource management RRM unit, configured to receive a conversation request initiated by a user equipment UE, and obtain conversation configuration information according to the conversation request, wherein the RRM unit is set in a base station controller BSC, wherein
the RRM unit is further configured to send a first message to a transcoder TC of the BSC, wherein the first message comprises the conversation configuration information; and
the TC, configured to judge whether configuration information of both ends of a conversation matches, and start tandem free operation TFO communication if a result of the judging is that the configuration information of both the ends of the conversation matches.

7. The device according to claim 6, wherein:
the RRM unit is further configured to send a second message to the TC, wherein the second message comprises TFO enabling information; and
the RRM unit is further configured to send a third message to a base transceiver station BTS, wherein the third message comprises information for activating a traffic channel of the BTS.

8. The device according to claim 6 or claim 7, wherein: in a communication process, when the UE needs a cell handover,
the RRM unit is further configured to send a fourth message to the TC, wherein the fourth message comprises conversation configuration information corresponding to a target cell of handover; and
the TC is further configured to judge whether the configuration information of both the ends of the conversation after the handover matches, and continue to adopts the TFO communication if a result of the judging is that the configuration information of both the ends of the conversation after the handover matches.

9. A voice communication system, comprising the voice communication device in any one of claims 6 to 8 and a base transceiver station BTS, wherein the communication device performs information interaction with a UE.

10. The communication system according to claim 9, wherein the BTS is configured to: judge whether an Abis interface rate changes when the UE sends a rate change request CMR; and buffer voice information if a result of the judging is that the Abis interface rate changes when the UE sends the CMR.
